(19) Europäisches Patentamt / European Patent Office / Office européen des brevets

(11) **EP 1 954 730 B2**

(12) **NEW EUROPEAN PATENT SPECIFICATION**
After opposition procedure

(45) Date of publication and mention
of the opposition decision:
**23.10.2019 Bulletin 2019/43**

(45) Mention of the grant of the patent:
**11.04.2012 Bulletin 2012/15**

(21) Application number: **06827206.1**

(22) Date of filing: **31.10.2006**

(51) Int Cl.:
*C08F 210/16* (2006.01)    *C08J 5/18* (2006.01)

(86) International application number:
**PCT/US2006/042529**

(87) International publication number:
**WO 2007/061587 (31.05.2007 Gazette 2007/22)**

(54) **HETEROGENEOUS, COMPOSITIONALLY PHASE SEPARATED, ETHYLENE ALPHA-OLEFIN INTERPOLYMERS**

HETEROGENE, AUS UNTERSCHIEDLICHEN PHASEN ZUSAMMENGESETZTE ETHYLEN-ALPHA-OLEFIN INTERPOLYMERE

INTERPOLYMÈRES HÉTÉROGÈNES À BASE D'ALPHA OLÉFINE D'ÉTHYLÈNE EN COMPOSITION À PHASE SÉPARÉE

(84) Designated Contracting States:
**AT BE BG CH CY CZ DE DK EE ES FI FR GB GR HU IE IS IT LI LT LU LV MC NL PL PT RO SE SI SK TR**

(30) Priority: **23.11.2005 US 739681 P**

(43) Date of publication of application:
**13.08.2008 Bulletin 2008/33**

(73) Proprietor: **Dow Global Technologies LLC Midland, MI 48674 (US)**

(72) Inventors:
• **NIETO, Jesus**
  **E-43850 Cambrils (ES)**
• **HAGEN, Hendrik**
  **E-43003 Tarragona (ES)**

(74) Representative: **Beck Greener LLP**
**Fulwood House**
**12 Fulwood Place**
**London WC1V 6HR (GB)**

(56) References cited:
WO-A-98/26000         WO-A-99/14271
WO-A-03/048213        WO-A2-00/40230
US-A- 4 547 475       US-A- 5 210 142
US-A- 5 370 940       US-A1- 2003 078 357
US-B1- 6 319 989

• **Shenoy & D R Saini A V: "Melt Flow Index : more than just a quality control rheological parameter. Part 1", ADVANCES IN POLYMER TECHNOLOGY, vol. 6, no. 1, 1986, pages 1-58, XP002622003,**
• **PEACOCK, A.J.: "HANDBOOK OF POLYETHYLENE, STRUCTURES, PROPERTIES AND APPLICATIONS", 2000 pages 208-210,238,**
• **STEHLING, F.: "Causes of Haze of Low-Density Polyethylene Blown Films", Macromolecules, vol. 14, 1981, pages 698-708,**

Remarks:
The file contains technical information submitted after the application was filed and not included in this specification

**Description**

Background of the Invention

This invention relates to a heterogeneous ethylene/$\alpha$-olefin copolymer having a relatively high melt index, low density, and narrow molecular weight distribution, and highly separated composition distribution, as determined by CRYSTAF or ATREF analysis. The invention also relates to a process for making such a copolymer, blends thereof with additional polymers, and fabricated articles made from all of the above. The novel copolymer exhibits improved toughness and adhesion properties as well as good processability. In addition, films made from the resin as well as blends incorporating the same demonstrate improved optical and tear properties and are particularly well-suited for use in applications such as trash can liners, lamination films, oriented shrink films and bags, overwrap films, and heavy duty shipping bags, especially as blown films.

Heterogeneous polymers of ethylene copolymerized or interpolymerized with at least one unsaturated comonomer, prepared by use of Ziegler-Natta catalyst compositions are well known in the art and commercially available. While the art is replete with various products and manufacturing techniques for preparing ethylene copolymers using Ziegler/Natta catalysts, the known methods still lack a desired ability to prepare a single resin having good toughness properties, good processability and improved optical properties. That is, known ethylene resins (including single reactor products and even multiple reactor products or polymer blends) still do not exhibit the desired balance of good processability (as indicated by ease of extrusion processing to avoid, for example, excessively high extruder current requirements for blown film fabrication with sufficient melt strength to permit, for example, good bubble stability to maximize output rates), a good balance of tear resistance; good tensile and impact properties; low film haze and high gloss.

The traditional solution for achieving improved toughness properties for ethylene interpolymers involves manufacturing products with narrow molecular weight distributions due to the fact that broad molecular weight distributions are known to yield reduced toughness properties. In addition, linear ethylene homopolymers are known to provide improved toughness properties relative to highly branched LDPE but with loss of processing ability. Blends of the two resins are therefore desired in order to provide a balance of properties. Furthermore, compositional uniformity amongst components of a resin blend may provide enhanced toughness properties. Providing the proper balance of resin properties through modification of the blend components is the objective of numerous prior art publications and patents.

For example, Lai et al., U.S. Patent ("USP") 5,272,236, disclosed substantially linear ethylene polymers characterized as having narrow molecular weight distribution, high compositional uniformity and long chain branching. Kale et al., USP 5,210,142 and Hazlitt et al., USP 5,370,940, disclosed polymer blends exhibit good handling properties and processability. Fraser et al., USP 4,243,619 disclosed film products made from a narrow molecular weight distribution ethylene/$\alpha$-olefin copolymer composition prepared by a Ziegler catalyst system which is said to exhibit good optical and mechanical properties. Research Disclosures No. 310163 and 37644 taught blends of Ziegler-Natta catalyzed resins and resins made using metallocenes or other homogeneous metal complex based catalysts and film products therefrom. Hodgson et al, USP 5,376,439 also describe film from a polymer blend which is said to have excellent elongation, tensile and impact properties. WO 98/26000 disclosed polymer blends for cast films comprising a substantially linear ethylene/$\alpha$-olefin interpolymer and a heterogeneous (Ziegler/Natta) interpolymer. Other pertinent references includes US2002/198,341; US2003/207,955; USP's 6,593,005; 6,552,129; 6,426,384; 6,410,659; 5,714,547; 5,681,523; 4,621,009; 4,337,284; 4,258,166; 4,242,479; 4,226,905; 4,136,072; 4,063,009; 3,826,792; and 3,574,138; EP-A-882,743; EP-A-958,313; EP-A-882,741; EP-A-460,942; EP-A-341,091; EP-A-141,597; and EP-A-109,779; WO99/46302; WO95/26372; and WO94/14855; and JP2005/089,693.

WO-A-9914271 discloses ethylene interpolymer compositions comprising ethylene interpolymerized with at least one unsaturated comonomer, wherein the composition has:

a $M_w/M_n$ less than or equal to 3.3,
a composition density less than 0.945 g/cc,
at least two polymer components, the first component having a first viscosity average molecular weight, $M_{v1}$, and the second component having a second viscosity average molecular, $M_{v2}$,
a first ATREF peak temperature, $T_{peak1}$ and a second ATREF peak temperature, $T_{peak2}$, corresponding to the at least two components and either

i) an $I_{10}/I_2$ in the range of from greater than 6.6 to 8.2,

$M_{v1}/M_{v2}$ less than or equal to 1, and
the temperature differential (AT) between $T_{peak2}$ and $T_{peak1}$, decreases with increased composition density such that AT is less than 23°C at composition densities greater than or equal to 0.926 g/cm$^3$ and greater than 13°C at composition densities less than or equal to 0.92 g/cm$^3$, or

ii) an $I_{10}/I_2$ ratio greater than 6.6,

$M_{v1}/M_{v2}$ in the range of from 0.6 to 1.2, and
the temperature differential AT is equal to or less than the product of the equation:

$$AT = [5650.842 \times \rho2] - [11334.5 \times \rho] + 5667.93$$

wherein AT is in degrees Celsius and $\rho$ is composition density in g/cm$^3$.

The ethylene interpolymer composition of Comparative Example 13 of WO-A-9914271 has a melt index of 1.02 g/10 mins, $M_w/M_n$ of 3.50, a composition density of 0.9201 g/cc, an $I_{10}/I_2$ of 7.6, a $M_{v1}/M_{v2}$ of 0.70 and an AT of 13°C.

US-A-2003078357 discloses homopolymers of ethylene and interpolymers of ethylene and at least one alpha-olefin and having a single DSC melt peak between -30 and 150 °C and various combinations of properties selected from:

$I_{10}/I_2$ of at least 5.63,
$M_w/M_n$ defined by the equation: Mw/Mn ≤ ($I_{10}/I_2$)-4.63 or within the range from 1.5 to 2.5,
a critical shear stress at onset of gross melt fracture greater than $4x10^6$ dyne/cm$^2$ or a critical shear rate at onset of surface melt fracture at least 50 percent greater than the critical shear rate at the onset of surface melt fracture of a linear ethylene polymer with an $I_2$, $M_w/M_n$, and density each within ten percent of the novel ethylene polymer and from 0.01 to 3 long chain branches/1000 total carbons

The ethylene interpolymer composition of Comparative Example 7 of US-A-2003078357 has a melt index of 1 g/10 mins, $M_w/M_n$ of 3.5 - 3.8, density of 0.92 g/cc, an $I_{10}/I_2$ of 7.8-8, and DSC melt peaks at 114, 118 & 122°C

Despite of the foregoing disclosures, there still remains a need in the art for a single ethylene interpolymer that exhibits high, balanced toughness, good processability and good optical properties, especially for use in blown film applications. There also remains a need for a composition comprising such an ethylene interpolymer with a desired balance of properties. There is also a need for a film, especially a blown film or a multiple layer film, with a desired property balance. These and other objects will become apparent from the detailed description of the present invention provided herein below.

Summary of the Invention

A first aspect of the present invention is a copolymer comprising ethylene interpolymerized with at least one $C_{3-10}$ α-olefin, especially 1-hexene or 1-octene, and especially a heterogeneous interpolymer prepared under Ziegler/Natta polymerization conditions, characterized by:

a) a melt index range from 1.1 to 1.6 dg/min., preferably from 1.2 to 1.4 dg/min., as determined according to ASTM D-1238, Condition 190 °C/2.16 kg,
b) a density from 0.913 to 0.921 g/cc, preferably from 0.915 to 0.919 g/cc, and most preferably from 0.916 to 0.918 g/cc, as determined according to ASTM-792,
c) an $I_{10}/I_2$ from 7.0 to 7.7, preferably from 7.2 to 7.5, as determined in accordance ASTM D-1238, Condition 190 °C/2.16 kg and Condition 190°C/10 kg,
d) the normalized SCBD as determined by CRYSTAF at a cooling rate of 0.2 °C/min comprises a bimodal distribution in the temperature range from 30 to 90°C having peaks corresponding to a low crystalline component (having a peak height in relative amount of $RA_1$) and high crystalline polymeric component (having a peak height in relative amount of $RA_2$) and a curve minimum at a temperature between said first and second peaks, (having a curve minimum height, MA) wherein the ratio of the low crystalline component peak height divided by the curve minimum height ($RA_1$/MA) is greater than 2.2, preferably greater than 2.3.

In a preferred embodiment of the first aspect, the normalized SCBD curve is further characterized by a ratio of the low crystalline component peak height divided by the high crystalline polymer peak height ($RA_1/RA_2$) of less than 3.0, preferably less than 2.0.

The copolymers of the invention can be prepared under Ziegler/Natta polymerization conditions. In this regard, it is surprising that the reaction conditions employed in the polymerization, especially lower reaction temperatures and reduced cocatalyst ratio, would lead to dramatically improved polymer properties.

The copolymer of the invention can be blended with one or more additional ethylene containing homopolymers or interpolymers. Especially desired are blends with ethylene homopolymers, especially LDPE or HDPE, or with interpolymers of ethylene with one or more $C_{3-8}$ $\alpha$-olefins, especially LLDPE.

Surprisingly, the present resins, including the neat polymers or resin blends containing the same, exhibit distinctly improved performance properties compared to similar resins lacking in the requisite density, melt index, molecular weight distribution, and SCBD fingerprint. In particular, the present polymers, including blends, possess improved processability (lower power consumption for extrusion or melt blending operations) and articles, especially films, formed there from exhibit improved physical properties, especially higher gloss, reduced haze, and lower hot tack initiation temperatures (HTIT).

Brief Description of the Drawings

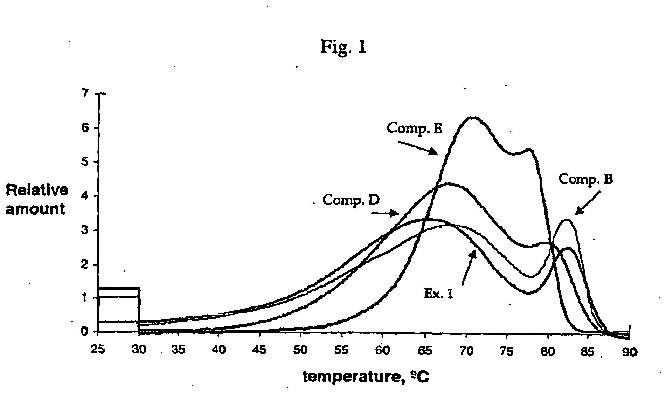

FIG. 1 is the CRYSTAF curve of the polymer of Example 1 and three comparative heterogeneous linear low density polyethylene polymers.

Detailed Description of the Invention

All references to the Periodic Table of the Elements herein shall refer to the Periodic Table of the Elements, published and copyrighted by CRC Press, Inc., 2003. Also, any references to a Group or Groups shall be to the Groups or Groups reflected in this Periodic Table of the Elements using the IUPAC system for numbering groups Unless stated to the contrary, customary in the art, or implicit from the context, all parts and percentages are expressed on a weight basis.

The term "comprising" and derivatives thereof is not intended to exclude the presence of any additional component, step or procedure, whether or not the same is disclosed herein. In order to avoid any doubt, all compositions claimed herein through use of the term "comprising" may include any additional additive, adjuvant, or compound whether polymeric or otherwise, unless stated to the contrary. The term "consisting of" excludes any component, step or procedure not specifically delineated or listed. The term "or", unless stated otherwise, refers to the listed members individually as well as in any combination.

The term "polymer", includes both homopolymers, that is polymers prepared from a single monomer, and copolymers (interchangeably referred to herein as interpolymers), meaning polymers prepared by reaction of at least two monomers.

As used herein with respect to a chemical compound, unless specifically indicated otherwise, the singular includes all isomeric forms and vice versa (for example, "hexane", includes all isomers of hexane individually or collectively). The terms "compound" and "complex", if used, refer interchangeably to organic-, inorganic- or organometal compounds. The term, "atom" refers to the smallest constituent of an element regardless of ionic state, that is, whether or not the same bears a charge or partial charge or is bonded to another atom.

As used herein the term "aromatic" refers to a polyatomic, cyclic (including polycyclic), conjugated ring system containing $(4\delta+2)$ $\pi$-electrons, wherein $\delta$ is an integer greater than or equal to 1. The term "aryl" refers to a monovalent aromatic substituent.

Short Chain Branching Distributions (SCBD) are determined by crystallization analysis fractionation (CRYSTAF) using a CRYSTAF 200 unit commercially available from PolymerChar, Valencia, Spain. The samples are dissolved in 1,2,4 trichlorobenzene at 160°C (0.66 mg/mL) for 1 hour and stabilized at 95°C for 45 minutes. The sampling temperatures range from 95 to 30°C at a cooling rate of 0.2°C/min. An infrared detector is used to measure the polymer solution concentrations. The cumulative soluble concentration is measured as the polymer crystallizes while the temperature is decreased. The analytical derivative of the cumulative profile reflects the short chain branching distribution of the polymer.

The CRYSTAF peak temperatures, peak areas, and other parameters are identified by the peak analysis module included in the CRYSTAF Software (Version 2001.b, PolymerChar, Valencia, Spain). The CRYSTAF peak finding routine identifies a peak temperature as a maximum in the dW/dT and the area between the largest positive inflections on either side of the identified peak in the derivative curve. The integral of the curve provides the relative quantity of each resin component. To calculate the CRYSTAF curve, the preferred processing parameters are with a temperature limit of 70°C and with smoothing parameters above the temperature limit of 0.1, and below the temperature limit of 0.3.

The term "CRYSTAF peak temperature" as used herein refers to the temperature that corresponds to a peak observed on the CRYSTAF curve in the range of 30 to 90 °C, normalized to eliminate concentration effects. A peak corresponds to a substantial weight percent of crystallized polymer portion based on the total amount of crystallizable polymer portions for the whole composition. In particular, the soluble fraction appearing in the curve at a temperature near 30°C is not considered a peak. The present polymers have two CRYSTAF peak temperatures, corresponding to a high crystalline fraction and a fraction of lower crystallinity. For purposes of the present invention, a CRYSTAF peak is distinguished from shoulders, humps and doublets. That is, the present SCBD curves are characterized by a clearly defined minimum (evidenced by the existence of an inflection point or $T_{min}$) at a point somewhere between the two CRYSTAF peak temperatures. Resins satisfying the foregoing requirement are referred to herein as having a bimodal SCBD curve with well resolved peak elution temperatures or alternatively, as being compositionally phase separated or as having a highly separated composition distribution.

In addition to peak temperatures and minimums in the SCBD curve, other parameters that can be determined from the SCBD curve include the overall breadth of the polymer fractions, determined for example by standard statistical measurements such as width at ¾ height. The broadness index of the entire crystalline fractions of the curve can be determined as well. One measure of this value is R which is defined by the formula: $R = 100 \times (Tw/Tn-1)$, where,

$$Tw = \text{weight average temperature } (\textstyle\sum[Ci] * Ti) / (\textstyle\sum[Ci]),$$

and

$$Tn = \text{number average temperature } (\textstyle\sum[Ci]) / ((\textstyle\sum[Ci]) / Ti),$$

wherein $Ci$ = concentration and $T$ = temperature in °C.

The term "heterogeneous ethylene interpolymer" refers to linear low density polyethylene prepared using Ziegler/Natta polymerization techniques and having a comparatively low short chain branching distribution index. That is, the interpolymers have a relatively broad short chain branching distribution. Typically, the polymers have a SCBDI (Short Chain Branching Distribution Index, as determined by the CRYSTAF Software program) of less than 50 percent and more typically less than 30 percent.

SCBDI is defined as the weight percent of the polymer molecules having a comonomer content within 50 percent of the median total molar comonomer content and represents a comparison of the monomer distribution in the interpolymer to the monomer distribution expected for a Bemoullian distribution. The SCBDI of a polymer can also be calculated from TREF (Temperature Rising Elution Fractionation) as described, for example, by Wild et al., Journal of Polymer Science, Poly. Phys. Ed., Vol. 20, p. 441 (1982), or in US Patent 4,798,081; 5,008,204; or by L. D. Cady, "The Role of Comonomer Type and Distribution in LLDPE Product Performance," SPE Regional Technical Conference, Quaker Square Hilton, Akron, Ohio, October 1-2, pp. 107-119 (1985). However, when using the TREF technique purge quantities should not be included in the SCBDI calculations. Monomer distribution of the polymer can also be determined using $^{13}C$ NMR analysis in accordance with techniques described in US Patent No. 5,292,845; US Patent No. 4,798,081; U.S. Patent No. 5,089,321 and by J. C. Randall, Rev. Macromol. Chem. Phys., C29, pp. 201-317.

The technique of Analytical Temperature Rising Elution Fractionation analysis (as described in US Patent No. 4,798,081 and abbreviated herein as "ATREF") may also be employed in analysis of the present polymers. In the technique, the composition to be analyzed is dissolved in a suitable hot solvent (preferably trichlorobenzene) and allowed to crystallize in a column containing an inert support (for example, stainless steel shot) by slowly reducing the temperature. The column is equipped with one or more detectors, such as a refractive index detector, a differential viscometer (DV) detector, or both. The technique employing both detectors is referred to as ATREF-DV. The ATREF or ATREF-DV chromatogram curve is generated by eluting the crystallized polymer sample from the column by slowly increasing the temperature of the eluting solvent (trichlorobenzene). The refractive index detector provides the short chain distribution information and the differential viscometer detector provides an estimate of the viscosity average molecular weight. ATREF and ATREF-DV provide essentially the same short chain branching distribution and other compositional information about the polymer as is determined by CRYSTAF.

Polymer density refers to polymer melt density and is measured in accordance with ASTM D-792.

The molecular weight of polyolefin polymers is conveniently indicated using a melt index measurement according to ASTM D-1238, Condition 190 °C/2.16 kg (formerly known as "Condition E" and also known as $I_2$). Melt index is inversely proportional to the molecular weight of the polymer. Thus, the higher the molecular weight, the lower the melt index, although the relationship is not linear. The melt index of the present polymer is generally higher than is normally employed for film forming ethylene interpolymer compositions. Highly preferably, the polymer has a melt index of 1.3 g/10 minutes.

Other measurements useful in characterizing the molecular weight of ethylene/$\alpha$-olefin interpolymers involve melt index determinations with higher weights, such as, for example, ASTM D-1238, Condition 190 °C/10 kg (formerly known as "Condition N" and also known as $I_{10}$) or ASTM D-1238, Condition 190 °C/21.6 kg, (formerly known as "Condition Z" giving Mz). The ratio of a higher melt index determination to a lower weight determination is known as a melt flow ratio, for example, $I_{10}/I_2$. In general, the present polymers have a melt flow ratio that is lower than conventional heterogeneous resins. In a preferred embodiment, the inventive polymer has a melt flow ratio of 7.4.

Molecular weight distributions (Mw/Mn) of ethylene interpolymers may be determined by gel permeation chromatography (GPC), suitably employing a Waters 150C high temperature chromatographic unit equipped with a differential refractometer and three columns of mixed porosity. The columns are supplied by Polymer Laboratories and are commonly packed with sorbants having pore sizes of 0.1, 1.0, 10 and 100 $\mu$m. The solvent is 1,2,4-trichlorobenzene, from which about 0.3 percent solutions of the samples are prepared for injection. The flow rate is about 1.0 mL/min, unit operating temperature is about 140°C and the injection size is about 100 μL.

Narrow molecular weight distribution polystyrene standards (from Polymer Laboratories) are employed for calibration. The equivalent polyethylene molecular weights are then determined by using appropriate Mark-Houwink coefficients for polyethylene and polystyrene (as described by Williams and Ward in Journal of Polymer Science, Polymer Letters, Vol. 6, p. 621, 1968) to derive the equation: $M_{polyethylene} = a * (M_{polystyrene})^b$, where a = 0.4316 and b = 1.0.

Weight average molecular weight, $M_W$, is calculated according to the formula: $Mj = (\sum w_i(M_i))^j$; where $w_i$ is the weight fraction of the molecules with molecular weight $M_i$ eluting from the GPC column in fraction i. When calculating $M_w$, j = 1. When calculating $M_n$, j = -1.

Generally, $I_{10}/I_2$ values provide equivalent information on the polydispersity of a resin as do $M_w/M_n$ ratios along with a better indication of the melt rheology properties. Generally, the present polymers have a Mw/Mn from 3.2 to 3.6, preferably from 3.3 to 3.6.

A GPC deconvolution technique can be used to determine the melt index of individual ethylene polymer components especially blends of homogeneously branched and heterogeneously branched polymers. In this technique, GPC data are generated using, for example a Waters 150C high temperature GPC chromatograph as described herein above. Given empirical elution volumes, molecular weights can be conveniently calculated using a calibration curve generated from a series of narrow molecular weight distribution polystyrene standards. The GPC data should be normalized prior to running the deconvolution procedure to insure an area of unity under the weight fraction versus log(Mw) GPC curve.

For the deconvolution technique, homogeneously branched ethylene polymers are assumed to follow a Bamford-Tompa molecular weight distribution, according to Eq. [1],

$$w_i(M_i) = \ln(10)\frac{M_i}{M_n}\exp((-\frac{M_i(1+\zeta)}{M_n}))\times(\frac{2+\zeta}{\zeta})^{1/2}\times I_1(\frac{M_i\zeta^{1/2}(2+\zeta)^{1/2}}{M_n}) \quad [1]$$

where $w_i$ is the weight fraction of polymer with molecular weight $M_i$, $M_n$ is the number average molecular weight, $I_1(x)$ is the modified Bessel function of the first kind of order one, defined by Eq.[2],

$$I_1(x) = \sum_b \frac{x^{2b+1}}{2^{2b+1}b!(b+1)!} \quad [2]$$

and $\zeta$ is an adjustable parameter which broadens the molecular weight distribution, as shown in Eq.[3].

$$\frac{M_w}{M_n} = 2+\zeta \quad [3]$$

For the deconvolution technique, heterogeneously branched ethylene polymers such as those of the invention and other Ziegler/Natta polymers are assumed to follow a log-normal distribution, Eq.[4],

$$w_i(M_i) = \frac{1}{\beta(2\pi)^{0.5}}\exp(-\frac{1}{2}(\frac{\log(M_i)-\log(M_o)}{\beta})^2) \quad [4]$$

where $wi$ is the weight fraction of polymer with molecular weight $M_i$, $M_o$ is the peak molecular weight and β is a parameter which characterizes the width of the distribution. B is assumed to be a function of $M_o$, as shown in Eq. [5].

$$\beta = 5.70506 - 2.52383Log(M_o) + 0.30024(Log(M_o))^2 \quad [5]$$

The GPC deconvolution technique involves a four parameter fit, $M_n$ and $\zeta$ for any homogeneously branched ethylene polymers, $M_o$ for heterogeneously branched ethylene polymer components, and the weight fraction amount of the homogeneously branched ethylene polymer. A non-linear curve-fitting subroutine within SigmaPlot™ supplied by Jandel Scientific (v3.03) is used to estimate these parameters. Given the number average molecular weight ($M_n$), Eq. [3], of any homogeneously branched ethylene polymer component, its melt flow ratio ($I_{10}/I_2$), and its density, its melt

index ($I_2$) can be conveniently calculated using Eq.[6].

$$I_2^{FCPA} = \exp(62.782 - 3.8620 Ln(M_w) - 1.7095 Ln((\frac{I_{10}}{I_2})^{FCPA}) - 16.310 \times \rho^{FCPA}) \quad [6]$$

where FCPA denotes the homogeneously branched ethylene polymer component.

The novel resins of the invention may be prepared using conventional Ziegler catalyst compositions disclosed in the art for polymerizing ethylene and one or more α-olefins, especially 1-hexene or 1-octene, in a single reactor or in two reactors in series configuration, each reactor operating under solution polymerization conditions. Preferred is the use of two solution reactors operating under high ethylene conversion conditions at pressures from 1.0 to 50 MPa. Blends comprising the present polymer may be prepared by use of multiple reactors operating under different polymerization conditions, such as one metallocene or homogeneous polymerization and one Ziegler/Natta polymerization, or by use of melt blending techniques. Preferred Ziegler catalysts are supported complexes of titanium that are particularly adapted for use at the high polymerization temperatures under solution process conditions.

Suitable Ziegler-Natta catalysts include supported transition metal compounds, especially those wherein the support comprises a magnesiumhalide compound. Typically, the transition metal is a Group 4, 5, or 6 metal and the transition metal compound is represented by the formulas: $TrX'_{4-q}(OR^1)_q$, $TrX'_{4-q}R^2_q$, $VOX'_3$ or $VO(OR^1)_3$, wherein,
Tr is a Group 4, 5, or 6 metal, preferably a Group 4 or 5 metal, most preferably titanium, vanadium or zirconium,
V is vanadium,
q is 0 or a number equal to or less than 4,
X' is a halogen, preferably chloride, and
$R^1$ and $R^2$, independently each occurrence are $C_{1-20}$ organic groups, especially $C_{1-6}$ alkyl, aralkyl, aryl, or haloaryl groups lacking in hydrogens located in positions beta to the metal carbon bond.

Illustrative but non-limiting examples of suitable organic groups are alkyl groups such as methyl, neo-pentyl, 2,2-dimethylbutyl, and 2,2-dimethylhexyl; aryl groups such as phenyl, aralkyl groups such as benzyl; cycloalkyl groups such as 1-norbornyl.

Illustrative but non-limiting examples of the transition metal compounds include $TiCl_4$. $TiBr_4$, $Ti(OC_2H_5)_3Cl$, $Ti(OC_2H_5)Cl_3$, $Ti(OC_4H_9)_3Cl$, $Ti(OC_3H_7)_2Cl_2$, $Ti(OC_6H_{13})_2Cl_2$, $Ti(OC_8H_{17})_2Br_2$, and $Ti(OC_{12}H_{25})Cl_3$, $Ti(O-i-C_3H_7)_4$, and $Ti(O-n-C_4H_9)_4$. Illustrative but non-limiting examples of vanadium compounds include $VCl_4$, $VOCl_3$, $VO(OC_2H_5)_3$, and $VO(OC_4H_9)_3$. Illustrative but non-limiting examples of zirconium compounds include $ZrCl_4$, $ZrCl_3(OC_2H_5)$, $ZrCl_2(OC_2H_5)_2$, $ZrCl(OC_2H_5)_3$, $Zr(OC_2H_5)_4$, $ZrCl_3(OC_4H_9)$, $ZrCl_2(OC_4H_9)_2$, and $ZrCl(OC_4H_9)_3$. Mixtures of transition metal compounds can be employed if desired.

Most highly preferred transition metal compounds are vanadium tetrachloride, vanadium oxychloride, titanium tetraisopropoxide, titanium tetrabutoxide, titanium tetrachloride, and mixtures of the foregoing.

Additional examples of suitable Ziegler/Natta catalyst compositions are those derived from magnesium halides or organomagnesium halides and transition metal halide compounds. Examples of such catalysts are described in U.S. Pat Nos. 4,314,912 (Lowery, Jr. et al.), 4,547,475 (Glass et al.), 4,612,300 (Coleman, III), and elsewhere.

Particularly suitable organomagnesium halide compounds include, for example, the reaction product of a halide source with a hydrocarbon soluble hydrocarbylmagnesium compound or mixture of compounds. Exemplary organomagnesium compounds include di($C_{1-20}$)alkylmagnesium or di($C_{1-20}$)arylmagnesium compounds, particularly di(n-butyl)magnesium, di(sec-butyl)magnesium, diisopropylmagnesium, di-n-hexylmagnesium, isopropyl-n-butyl-magnesium, ethyl-n-hexylmagnesium, ethyl-n-butylmagnesium, di-n-octylmagnesium and others wherein the alkyl has from 1 to 20 carbon atoms. Exemplary suitable magnesium diaryls include diphenylmagnesium, dibenrylmagnesium and ditolylmagnesium. Additional suitable organomagnesium compounds include alkyl- and aryl- magnesium alkoxides, aryloxides and halides, as well as mixtures of the foregoing. Highly preferred organomagnesium compounds are the halogen-free organomagnesium compounds.

Among the halide sources which can be employed in the manufacture of Ziegler catalysts for use herein include metallic halides and nonmetallic halides, including organohalides and hydrogen halides.

Suitable metallic halides which can be employed herein include those represented by the formula: $MR_{y-a}X_a$, wherein:

M is a metal of Groups 12, 13 or 14 of the Periodic Table of Elements,
R is a monovalent organic radical,
X is a halogen,
y has a value corresponding to the valence of M, and
a has a value from 1 to y.

Preferred metallic halides are aluminum halides of the formula: $AlR_{3-a}X_a$, wherein:

each R is independently $C_{1-10}$ hydrocarbyl, preferably $C_{1-6}$ alkyl,
X is a halogen, and
a is a number from 1 to 3.

Most preferred are akylaluminum halides such as ethylaluminum sesquichloride, diethylaluminum chloride, ethylaluminum dichloride, and diethylaluminum bromide, with ethylaluminum dichloride being especially preferred. Alternatively, a metal halide such as aluminum trichloride or a combination of aluminum trichloride with an alkyl aluminum halide or a trialkyl aluminum compound may be suitably employed.

Suitable nonmetallic halides and organohalides are represented by the formula $R'(X)_r$ wherein R' is a $C_{1-10}$ organic radical or a non-metal such as Si, Ga or Ge; X is a halogen, especially chlorine; and r is an integer from 1 to 6, preferably 1. Particularly suitable halide sources include, for example, hydrogen halides and active organic halides such as *t*-alkyl halides, *sec*-alkyl halides, allyl halides, and benzyl halides and other active hydrocarbyl halides wherein hydrocarbyl is as defined hereinbefore. By an active organic halide is meant a hydrocarbyl halide that contains a labile halogen at least as active, that is, as easily lost to another compound, as the halogen of sec-butyl chloride, preferably as active as t-butyl chloride. In addition to the organic monohalides, it is understood that organic dihalides, trihalides and other polyhalides that are active as defined herein before are also suitably employed. Examples of preferred halide sources include hydrogen chloride, hydrogen bromide, t-butyl chloride, t-amyl bromide, allyl chloride, benzyl chloride, crotyl chloride, methylvinyl carbinyl chloride, $\alpha$-phenylethyl bromide, and diphenyl methyl chloride. Most preferred are hydrogen chloride, t-butyl chloride, allyl chloride and benzyl chloride.

The organomagnesium halide can be pre-formed from the organomagnesium compound and the halide source or it can be formed in situ in which instance the catalyst is preferably prepared by mixing in a suitable solvent or reaction medium (1) the organomagnesium component and (2) the halide source, followed by the other catalyst components.

Suitable catalyst materials may also be derived from inert oxide supports and transition metal compounds. Examples of such compositions suitable for use in the solution polymerization process are described in USP 5,420,090 (Spencer. et al.). The inorganic oxide support used in the preparation of such catalysts may be any particulate oxide or mixed oxide as previously described which has been thermally or chemically dehydrated such that it is substantially free of adsorbed moisture.

The specific particle size, surface area, pore volume, and number of surface hydroxyl groups characteristic of the inorganic oxide are not critical to its utility in the practice of the invention. However, since such characteristics determine the amount of inorganic oxide to be employed in preparing the catalyst compositions, as well as affecting the properties of polymers formed with the aid of the catalyst compositions, these characteristics must frequently be taken into consideration in choosing an inorganic oxide for use in a particular aspect of the invention. In general, optimum results are usually obtained by the use of inorganic oxides having an average particle size in the range of 1 to 100 $\mu$m, preferably 2 to 20 $\mu$m; a surface area of 50 to 1,000 $m^2/g$, preferably 100 to 450 $m^2/g$; and a pore volume of 0.5 to 3.5 $cm^3/g$; preferably 0.5 to 2 $cm^3/g$.

In order to further improve catalyst performance, surface modification of the support material may be desired. Surface modification is accomplished by specifically treating the support material such as silica, alumina or silica-alumina with an organometallic compound having hydrolytic character. More particularly, the surface modifying agents for the support materials comprise the organometallic compounds of the metals of Group IIA and IIIA of the Periodic Table. Most preferably the organometallic compounds are selected from magnesium and aluminum organometallics and especially from magnesium and aluminum alkyls or mixtures thereof represented by the formulas and $R^1MgR^2$ and $R^1R^2AlR^3$ wherein each of $R^1$, $R^2$ and $R^3$ which may be the same or different are alkyl groups, aryl groups, cycloalkyl groups, aralkyl groups, alkoxide groups, alkadienyl groups or alkenyl groups. The hydrocarbon groups $R^1$, $R^2$ and $R^3$ can contain between 1 and 20 carbon atoms and preferably from 1 to 10 carbon atoms, and preferably are alkyl.

The surface modifying action is effected by adding the organometallic compound in a suitable solvent to a slurry of the support material. Contact of the organometallic compound in a suitable solvent and the support is maintained from about 30 to 180 minutes and preferably from 60 to 90 minutes at a temperature in the range of 20 to 100 °C. The diluent employed in slurrying the support can be any of the solvents employed in solubilizing the organometallic compound and preferably the diluent and solubilizing solvent are the same.

Any convenient method and procedure known in the art can be used to prepare a Ziegler-Natta catalyst suitable for use in the present invention. One suitable method and procedure is described in USP 4,612,300. The described method and procedure involves sequentially adding to a volume of aliphatic hydrocarbon, a slurry of anhydrous magnesium chloride in an aliphatic hydrocarbon, a solution of ethylaluminum dichloride in hexane, and a solution of titanium tetraisopropoxide in an aliphatic hydrocarbon, to yield a slurry containing a magnesium concentration of 0.166 M and a ratio of Mg/Al/Ti of 40.0:12.5:3.0. An aliquot of this slurry and a dilute solution of triethylaluminum (TEA) are independently pumped in two separate streams and combined immediately prior to introduction into the polymerization reactor system to give an active catalyst with a final TEA:Ti molar ratio in the range from 4.0:1 to 5.0:1.

More preferably, the support (measured for example as silica and magnesium content) to metal (for example vanadium, zirconium and titanium) molar ratio and the support surface area will be high. In one preferred embodiment, a $MgCl_2$ supported titanium catalyst system is employed to manufacture the heterogeneous polymer wherein the molar ratio between the magnesium and the titanium is in the range of 40 moles of Mg to less than 3 moles of Ti, preferably 40 moles of Mg to less than 2 moles Ti, more preferably 40.0 moles of Mg to 1.3-1.7 moles of Ti. Most preferably, this $MgCl_2$ supported titanium catalyst system is characterized by the $MgCl_2$ having a single pore size distribution of 20 to 25 $\mu$m and a specific surface area of 400 to 430 $m^2/g$.

Preferred dialkylmagnesium precursors for Mg support Ziegler Natta organomagnesium catalyst system are butyloctylmagnesium or butylethylmagnesium which are often stabilized with butylated hydroxytoluene (BHT) at about 0.5 percent.

Although the foregoing process conditions are suitable for use in preparing the polymers of the present invention, it has been discovered that the present unique polymer characteristics, especially interpolymers having narrow molecular weight distributions and narrow comonomer distributions, are uniquely obtained under solution polymerization conditions by use of lower reactor temperatures for the polymerization, especially temperatures from 170 to 174°C, and a narrow range of cocatalyst/catalyst (Al:Ti) molar ratios, especially ratios from 4:1 to 5:1. Surprisingly, the resulting interpolymers resulting from the foregoing minor process adjustments, posses some or all of the following properties: improved melt rheology, especially reduced power consumption for extrusion operations, and improved film properties, including higher tear resistance, lower heat seal or hot-tack initiation temperature, reduced haze and increased gloss.

Blends comprising the polymer composition can be formed by any convenient method, including dry blending selected polymer components together and subsequently melt mixing the component polymers in an extruder or by mixing the polymer components together directly in a mixer (for example, a Banbury mixer, a Haake mixer, a Brabender internal mixer, or a single or twin screw extruder including a compounding extruder and a side-arm extruder employed directly down stream of a polymerization process). Physical properties of the resulting blends are improved by incorporation of the present interpolymers as well.

Additionally, a blend containing the present polymer may be manufactured *in-situ* using any polymerization method and procedure known in the art (including solution, slurry or gas phase polymerization processes at high or low pressures) provided the operations, reactor configurations, catalysts and the like are selected, employed and carried out to indeed provide the present polymer, with its defined combination of characteristics, as one distinct component of the resulting blend. A preferred method of manufacturing such a composition involves the utilization of a multiple reactor polymerization system with the various reactors operated in series or in parallel configuration or a combination of both where more than two reactors are employed. More preferably, such a blend could be manufactured using a two reactor system wherein the two reactors are operated in a series configuration and one, preferably the second reactor, is employed to produce the present polymer in the presence of the first formed polymer or polymer mixture.

In general, blends made containing from 40 to 95 percent of the present polymer, preferably from 60 to 90 percent, and more preferably 70 to 90 percent with a second polymer, preferably a low density polyethylene (LDPE), supplying from 60 to 5 percent, preferably 40 to 10, and more preferably 30 to 10 percent, based on the total polymer weight are most suited for film forming applications, especially blown film forming applications.

When the foregoing composition is prepared by means of a multiple reactor polymerization system (and especially in a two reactor system) with reactors configured in series, the polymer component manufactured in the first reactor of a series desirably should have a lower polymer density and/or a molecular weight equal to or lower than that of the second (or last) component polymer (that is $M_{w1}/M_{w2} \leq 1$). To insure this preference, it may be necessary in a continuous polymerization system to adjust the percent of make-up comonomer feed (for example 1-hexene or 1-octene) to the second reactor (or any other reactor other than the first reactor in a series) so as to produce a higher density and/or higher molecular weight polymer in the second reactor.

The polymerization reaction to prepare the polymers of the invention may be any reaction type or combination of reactions known in the art, including polymerization by solution, high pressure, slurry or gas phase. In one preferred embodiment, polymerization is conducted under continuous solution polymerization conditions in multiple reactors, especially two continuous loop reactors, operating under high ethylene conversion conditions.

Additives, such as antioxidants (for example, hindered phenolics, such as IRGANOX™ 1010 or IRGANOX™ 1076 supplied by Ciba Geigy), phosphites (for example, IRGAFOS™ 168 also supplied by Ciba Geigy), cling additives (for example, PIB or SANDOSTAB PEPQ™ (supplied by Sandoz), pigments, colorants, fillers, anti-stats, processing aids, and the like may also be included in the novel polymer, in compositions or blends thereof, or fabricated articles formed therefrom. Although generally not required, films, coatings and moldings formed from the novel composition may also contain additives to enhance antiblocking, mold release, and/or coefficient of friction characteristics including, but not limited to, untreated and treated silicon dioxide, talc, calcium carbonate, and clay, as well as primary, secondary and substituted fatty acid amides, release agents, silicone coatings, and so forth. Still other additives, such as quaternary ammonium compounds alone or in combination with ethylene-acrylic acid (EAA) copolymers or other functional polymers, may also be added to enhance the antistatic characteristics of films, coatings and moldings formed from the novel composition and permit the use of the composition in, for example, the heavy-duty packaging of electronically sensitive goods.

The fabricated articles of the invention (for example, a film, film layer, fiber, molding, sheet, pouch, bag, sack, tube or coating) may further include recycled and scrap materials and diluent polymers to provide, for example, multi-polymer blends to the extent that the desired property balance is maintained. Exemplary diluent materials include elastomers (for example, EPDM, EPR, styrene butadiene block polymers such as styrene-isoprene-styrene, styrene-butadiene, styrene-butadiene-styrene, styrene-ethylene-styrene and styrene-propylene-styrene), natural and synthetic rubbers and anhydride modified polyethylenes (for example, polybutylene and maleic anhydride grafted LLDPE and HDPE), high density polyethylene (HDPE), medium density polyethylene (MDPE), heterogeneously branched ethylene polymers (for example, ultra or very low density polyethylene and linear low density polyethylene) and homogeneously branched ethylene polymers (for example, substantially linear ethylene polymers) as well as with high pressure polyethylenes such as, for example, low density polyethylene (LDPE), ethylene/acrylic acid (EAA) interpolymers, ethylene/vinyl acetate (EVA) interpolymers and ethylene/methacrylate (EMA) interpolymers, and combinations thereof.

The fabricated articles of the invention may find utility in a variety of applications. Suitable applications include monolayer packaging films; multilayer packaging structures consisting of other materials such as, for example, biaxially oriented polypropylene, biaxially oriented ethylene homopolymer, or biaxially oriented ethylene/$\alpha$-olefin interpolymers for shrink film and barrier shrink applications; packages formed via form/fill/seal machinery; peelable seal packaging structures; cook-in-package food packages; compression filled packages; heat seal films and packages for snacks, grains, cereals, cheeses, frozen poultry, produce, frozen produce and other food packaging; cast stretch films; monolayer shrink film; heat sealable stretch wrap packaging film; ice bags; foams; molded articles; bag-n-box; fresh cut produce packaging; fresh red meat retail packaging; liners and bags such as, for example, cereal liners, grocery/shopping bags, and especially heavy-duty shipping sacks and trash can liners (bags).

The fabricated article of the invention can be prepared by any convenient method known in the art. Suitable methods include, for example, lamination and coextrusion techniques or combinations thereof; blown film; cast film; extrusion coating; injection molding; blow molding; thermoforming; profile extrusion, pultrusion; calendering; roll milling; compression molding; rotomolding; injection blow molding; fiber spinning, and combinations thereof. Preferably, however, the novel composition is fabricated into a blown film and used for packaging, liners, bags, sealing layers, and lamination applications.

The fabricated articles of the invention can be of any thickness required or desired for the intended end-use application. In particular, films according to the invention can be of any suitable gauge or thickness, however, practitioners will appreciate the significant down-gauging may be possible due to the high, balanced toughness properties thereof. For example, films for grocery or heavy duty shipping sacks prepared from the present resin typically have thicknesses less than 0.8 mm, preferably less than 0.1 mm, most preferably less than 0.05 mm.

## Examples

It is understood that the present invention is operable in the absence of any component which has not been specifically disclosed. The following examples are provided in order to further illustrate the invention and are not to be construed as limiting.

Several ethylene/1-hexene and ethylene/1-octene copolymers are obtained using two continuous stirred tank reactors, which are agitated and operated in series. The feed to the reactors comprises a $C_{7-8}$ alkane mixture having a boiling range from 100 to 140°C. The $\alpha$-olefin and compressed ethylene are dissolved in the solvent stream prior to reactor entry. The temperature of the solvent/monomer feed is typically from 15 to 35°C at pressures from 3.5 to 6.0 MPa. A separate stream the Ziegler/Natta type catalyst as a suspension in the same alkane mixture as described' above is injected into the first reactor at a rate such that the ethylene conversion is in the range from 88 to 92 percent. The catalyst is prepared essentially according to the procedure described in example 7 of USP 4,547,475. Together with the catalyst, triethylaluminum is fed to the reactor to act as the co-catalyst. For Examples 1-3, the reactor temperature is controlled in the range from 170 to 174°C. For comparatives A and B, the temperature is increased to 175 to 190 °C. Hydrogen is added to the feed stream in order to control the molecular weight of the resulting polymer. The Al/Ti molar ratio for Examples 1-3 is adjusted to 4-5, whereas for Comparatives A and B the range from 7-8 is employed. Comparatives A and B are DOWLEX™ NG5056G and DOWLEX™ SL2103 respectively, available from The Dow Chemical Company. Comparative C is linear low density polymer prepared by gas phase Ziegler/Natta polymerization techniques (EXCEED™ 1018, available from ExxonMobil Plastics, Inc.). Comparative D is BOROCENE™ FM5220, a LLDPE available from Borealis Polymers, Inc.

Physical properties of the resulting polymers are provided in Table 1.

Table 1

| Resin | comonomer | Mw | Mz | Mw/Mn | $I_2$, dg/min | Density g/cc | $I_{10}/I_2$ |
|---|---|---|---|---|---|---|---|
| Ex 1 | 1-octene | 101662 | 250493 | 3.36 | 1.32 | 0.9170 | 7.5 |
| Ex. 2 | 1-hexene | 108250 | 292536 | 3.58 | 1.31 | 0.9170 | 7.4 |
| Ex. 3 | 1-hexene | 108430 | 285199 | 3.43 | 1.32 | 0.9170 | 7.4 |
| A* | 1-octene | 110715 | 326123 | 3.59 | 1.10 | 0.9190 | 7.8 |
| B* | 1-octene | 124577 | 358310 | 3.77 | 0.71 | 0.9167 | 8.1 |
| C* | 1-hexene | 109267 | 184700 | 2.35 | 1.04 | 0.9180 | 5.7 |
| D* | 1-octene | - | 204184 | 2.76 | - | 0.9230 | - |
| * Comparative; not an example of the present invention. | | | | | | | |

In addition, SCBD of the polymer of Example 1 as well as three comparative resins (A, C and D) is measured by CRYSTAF. The resulting normalized curves are plotted in Figure 1. Various parameters determined by CRYSTAF software for all resins are provided in Table 2. The relative amount at $T_1$ and $T_2$ ($RA_1$ and $RA_2$ respectively), $T_{min}$ (the minimum curve temperature between 75 and 85 °C), the curve height at $T_{min}$, (MA), and various relations are provided in Table 2.

Table 2

| Ex. | PEAK1 °C(%) | $RA_1$ | PEAK2 °C (%) | $RA_2$ | $T_{min}$ (°C) | MA | $T_2$-$T_{min}$ | $RA_1$/ MA | $RA_1$/ $RA_2$ - | $RA_2$-MA | SDBI | $\Delta T_{3/4}$ °C |
|---|---|---|---|---|---|---|---|---|---|---|---|---|
| 1 | 65.4 (78.3) | 1.21 | 82.4 (14.8) | 2.54 | 77.7 | 1.21 | 4.7 | 2.79 | 1.33 | 1.29 | 18.3 | 4.0 |
| 2 | 66.3 (79.8) | 1.46 | 80.6 (14.0) | 2.62 | 76.3 | 1.46 | 4.3 | 2.42 | 1.35 | 1.33 | 17.7 | 4.0 |
| 3 | 65.8 (78.4) | 1.49 | 80.4 (15.8) | 2.48 | 76.1 | 1.49 | 4.3 | 2.32 | 1.40 | 1.16 | 17.5 | 4.0 |
| A* | 68.1 (76.0) | | 81.4 (18.6) | 3.22 | 77.0 | 1.93 | 4.4 | 1.89 | 1.13 | 0.99 | 17.7 | 4.3 |
| B* | 67.9 (75.4) | 1.70 | 82.2 (19.0) | 3.39 | 77.9 | 1.70 | 4.3 | 1.89 | 0.95 | 1.29 | 17.9 | 2.5 |
| C* | 67.9 (82.8) | 4.39 | 79.6 (15.0) | 2.86 | 77.2 | 2.57 | 2.4 | 1.71 | 1.53 | 0.29 | 14.6 | 25.0 |
| D* | 70.7 (73.1) | 6.34 | 77.2 (25.5) | 5.44 | 75.1 | 5.30 | 2.4 | 1.19 | 0.72 | 0.14 | 12.8 | 15 |

* Comparative, not an example of the invention

Film samples are fabricated from selected polymers (Ex. 1, A*, B*, C* and D*) as well as polymer blends employing 80 percent of the polymer of Examples 1-3 and Comparatives A*, B* and C*, in combination with a low density polyethylene resin (LDPE 300E, available from The Dow Chemical Company), on an Egan blown film unit equipped with 51 mm diameter, 32:1 L/D extruder and a 77 mm annular die. The blown film extrusion conditions were a die gap of 0.9 mm, a melt temperature of 232 °C, and a blowup ratio of 2.7:1. Resulting film samples are tested for Dart Impact (determined according to ASTM D1709, Method A), Elmendorf tear resistance in machine direction (MD tear), determined in accordance with ASTM D1922, gloss (determined in accordance with ASTM D2457), haze (determined in accordance with ASTM D1003), and hot tack initiation temperature (HTIT) (determined in accordance with ASTM F1921-98 (2004)). Results for films prepared from the pure resins are provided in Table 3. Results for films prepared from 80/20 blends with LDPE are contained in Table 4.

Table 3 Film Results Using Pure Resins

| Ex. | Amps | Melt P., MPa | Output Kg/hr | Dart Impact, g | MD Tear, g | Gloss percent | Haze percent | HTIT, °C |
|---|---|---|---|---|---|---|---|---|
| 1 | 28 | 30.4 | 22.5 | 418 | 899 | 68.8 | 8.2 | 97.0 |
| A* | 34 | 39.6 | 22.5 | 329 | 864 | 58.3 | 11.4 | - |
| C* | 41 | 30.1 | 29.0 | 9.44 | 619 | 41.5 | 21.1 | - |
| D* | 36 | 25.0 | 22.5 | 432 | 679 | 31.6 | 32.5 | 105.0 |
| * Comparative, not an example of the invention | | | | | | | | |

Table 4 Film Results Using Blends 80/20 with LDPE

| Ex. | Amps | Melt P., MPa | Output Kg/hr | Dart Impact, g | MD Tear, g | Gloss percent | Haze percent | HTIT, °C |
|---|---|---|---|---|---|---|---|---|
| 1 | 28 | 22.7 | 22.6 | 318 | 629 | 77.5 | 5.6 | 96.5 |
| 2 | 28 | 24.0 | 22.6 | 342 | 554 | 79.9 | 5.5 | 95.0 |
| 3 | 28 | 24.4 | 22.6 | 309 | 530 | 80.1 | 4.8 | 94.0 |
| A* | 30 | 38.2 | 22.5 | 247 | 570 | 73.0 | 6.7 | 103.0 |
| B* | 27 | 31.6 | 22.5 | 423 | 614 | 77.2 | 4.8 | - |
| C* | 35 | 28.9 | 22.6 | 366 | 540 | 77.7 | 5.1 | 101.0 |
| * Comparative, not an example of the invention | | | | | | | | |

The foregoing results demonstrate that the invented polymers and blends including the same possess a unique combination of processability along with good optical properties, good impact, and low hot tack initiation temperatures.

**Claims**

1. A copolymer comprising ethylene interpolymerized with at least one $C_{3-10}$ α-olefin, **characterized by**:

    a) a melt index range from 1.1 to 1.6 dg/min., as determined according to ASTM D-1238, Condition 190°C/2.16 kg,
    b) a density from 0.913 to 0.921 g/cc as determined according to ASTM D-792,
    c) an $I_{10}/I_2$ from 7.0 to 7.7, as determined in accordance ASTM D-1238, Condition 190°C/2.16 kg and Condition 190°C/10 kg, and
    d) the normalized SCBD as determined by CRYSTAF at a cooling rate of 0.2 °C/min comprises a bimodal distribution in the temperature range from 30 to 90 °C having peaks corresponding to a low crystalline component (having a peak height in relative amount of $RA_1$) and high crystalline polymeric component (having a peak height in relative amount of $RA_2$) and a curve minimum at a temperature between said first and second peaks, (having a curve minimum height, MA) wherein the ratio of the low crystalline component peak height divided by the curve minimum height ($RA_1$/MA) is greater than 2.2.

2. A copolymer according to claim 1 wherein the melt index range is from 1.2 to 1.4 dg/min., the density is from 0.915 to 0.919 g/cc, the $I_{10}/I_2$ is from 7.2 to 7.5, and the ratio of the low crystalline component peak height divided by the high crystalline polymer peak height ($RA_1/RA_2$) of less than 3.0.

3. A copolymer according to Claim 1 which has a melt index of 1.3 g/10 minutes.

4. A copolymer according to Claim 1 which has a melt flow ratio of 7.4.

5. A copolymer according to Claim 1 which has a Mw/Mn from 3.3 to 3.6.

6. A copolymer according to Claim 1 or Claim 2 which is a copolymer of ethylene and 1-hexene or ethylene and 1-octene prepared under Ziegler/Natta solution polymerization conditions.

7. A copolymer according to Claim 6 wherein the solution polymerization conditions comprise a temperature from 170 to 174°C, and a cocatalyst/catalyst (Al:Ti) molar ratio of from 4:1 to 5:1.

8. A copolymer according to Claim 1, Claim 2, or Claim 6 in the form of a sheet, a film; or at least one layer of a multilayer film; or a laminated article, a bag, a sack, or a pouch comprising said sheet, film or multilayer film.

9. A polymer blend comprising a copolymer according to Claim 1, Claim 2, or Claim 6 and one or more additional ethylene containing homopolymers or interpolymers.

10. A polymer blend containing from 40 to 95 percent based on the total polymer weight of a copolymer according to Claim 1, Claim 2, or Claim 6 and from 60 to 5 percent of a second polymer.

11. A polymer blend according to Claim 10 containing from 60 to 90 percent of said copolymer and 40 to 10 percent of said second polymer.

12. A polymer blend according to Claim 11 containing 70 to 90 percent of said copolymer and 30 to 10 percent of said second polymer.

13. A polymer blend according to any one of Claims 10 to 12 wherein said second polymer is a low density polyethylene (LDPE).

14. A polymer blend according to any one of Claims 10 to 13 prepared *in situ* by a multiple reactor polymerization system with reactors configured in series in which the polymer component manufactured in the first reactor of the series has a lower polymer density and/or a molecular weight equal to or lower than that of the second (or last) component polymer.

15. A polymer blend according to any one of Claims 10 to 14 in the form of a sheet, a film, or at least one layer of a multilayer film; or a laminated article, a bag, a sack, or a pouch comprising said sheet, film or multilayer film.


**Patentansprüche**

1. Copolymer, das ein mit mindestens einem $C_{3-10}$-$\alpha$-Olefin interpolymerisiertes Ethylen umfasst, **gekennzeichnet durch**

   a) einen Schmelzindexbereich von 1,1 bis 1,6 dg/min, ermittelt nach ASTM D-1238, Bedingung 190°C/2,16 kg,
   b) eine Dichte von 0,913 bis 0,921 g/cm$^3$, ermittelt nach ASTM D-792,
   c) ein $I_{10}/I_2$ von 7,0 bis 7,7, ermittelt nach ASTM D-1238, Bedingung 190°C/2,16 kg und Bedingung 190°C/10 kg, und
   d) die normalisierte SCBD, ermittelt **durch** CRYSTAF bei einer Abkühlungsgeschwindigkeit von 0,2°C/min, umfasst eine bimodale Verteilung im Temperaturbereich von 30 bis 90°C mit Peaks, die einer niedrigkristallinen Komponente (mit einer Peak-Höhe in der relativen Menge von $RA_1$) und einer hochkristallinen polymeren Komponente (mit einer Peak-Höhe in der relativen Menge von $RA_2$) und einem Kurvenminimum bei einer Temperatur zwischen dem ersten und dem zweiten Peak (mit einer Höhe MA des Kurvenminimums) entsprechen, wobei das Verhältnis der Peak-Höhe der niedrigkristallinen Komponente dividiert **durch** die Höhe des Kurvenminimums ($RA_1/MA$) größer ist als 2,2.

**2.** Copolymer nach Anspruch 1, wobei der Schmelzindex im Bereich von 1,2 bis 1,4 dg/min liegt, die Dichte im Bereich von 0,915 bis 0,919 g/cm$^3$ liegt, das $I_{10}/I_2$ im Bereich von 7,2 bis 7,5 liegt, und das Verhältnis der Peak-Höhe der niedrigkristallinen Komponente dividiert durch die Peak-Höhe des hochkristallinen Polymers ($RA_1/RA_2$) kleiner ist als 3,0.

**3.** Copolymer nach Anspruch 1, das einen Schmelzindex von 1,3 g/10 Minuten hat.

**4.** Copolymer nach Anspruch 1, das ein Schmelzflussverhältnis von 7,4 hat.

**5.** Copolymer nach Anspruch 1, das ein Mw/Mn von 3,3 bis 3,6 hat.

**6.** Copolymer nach Anspruch 1 oder 2, bei dem es sich um ein unter Ziegler/Natta-Lösungspolymerisationsbedingungen hergestelltes Copolymer von Ethylen und 1-Hexen oder Ethylen und 1-Octen handelt.

**7.** Copolymer nach Anspruch 6, wobei die Lösungspolymerisationsbedingungen eine Temperatur von 170 bis 174°C und ein Molverhältnis von CoKatalysator zu Katalysator (Al:Ti) von 4:1 bis 5:1 umfassen.

**8.** Copolymer nach Anspruch 1, 2 oder 6 in Form einer Folie, eines Films; oder mindestens einer Lage eines mehrlagigen Films; oder eines laminierten Gegenstands, einer Tasche, eines Sacks oder eines Beutels aus der Folie, dem Film oder dem mehrlagigen Film.

**9.** Polymermischung, die ein Copolymer nach Anspruch 1, 2 oder 6 und ein oder mehrere zusätzliche ethylenhaltige Homopolymere oder Interpolymere umfasst.

**10.** Polymermischung, die bezogen auf das Polymergesamtgewicht von 40 bis 95 Prozent eines Copolymers nach Anspruch 1, 2 oder 6 und von 60 bis 5 Prozent eines zweiten Polymers enthält.

**11.** Polymermischung nach Anspruch 10, die von 60 bis 90 Prozent des Copolymers und 40 bis 10 Prozent des zweiten Polymers enthält.

**12.** Polymermischung nach Anspruch 11, die 70 bis 90 Prozent des Copolymers und 30 bis 10 Prozent des zweiten Polymers enthält.

**13.** Polymermischung nach einem der Ansprüche 10 bis 12, wobei das zweite Polymer ein Polyethylen niedriger Dichte (LDPE) ist.

**14.** Polymermischung nach einem der Ansprüche 10 bis 13, hergestellt *in situ* durch eine Mehrreaktor-Polymerisationsanlage mit in Reihe geschalteten Reaktoren, bei der die in dem ersten Reaktor der Reihe hergestellte Polymerkomponente eine niedrigere Polymerdichte und/oder ein Molekulargewicht gleich oder kleiner als die zweite (oder letzte) Polymerkomponente besitzt.

**15.** Polymermischung nach einem der Ansprüche 10 bis 14 in Form einer Folie, eines Films, oder mindestens einer Lage eines mehrlagigen Films; oder eines laminierten Gegenstands, einer Tasche, eines Sacks oder eines Beutels aus der Folie, dem Film oder dem mehrlagigen Film.

**Revendications**

**1.** Copolymère comportant de l'éthylène interpolymérisé avec au moins une $\alpha$-oléfine en $C_{3\text{-}10}$, **caractérisé par** :

a) un indice de fluidité à chaud, déterminé selon la norme ASTM D-1238, à 190 °C sous 2,16 kg, valant de 1,1 à 1,6 dg/min ;
b) une masse volumique, déterminée selon la norme ASTM D-792, valant de 0,913 à 0,921 g/cm$^3$ ;
c) un rapport $I_{10}/I_2$ des indices de fluidité à chaud, déterminés selon la norme ASTM D-1238, à 190 °C sous 2,16 kg et à 190 °C sous 10 kg, valant de 7,0 à 7,7 ;
d) et le fait que la distribution normalisée des ramifications à chaînes courtes, déterminée par fractionnement CRYSTAF à la vitesse de refroidissement de 0,2 °C/min, comprend une distribution bimodale dans l'intervalle de température allant de 30 à 90 °C, avec des pics correspondant à un composant faiblement cristallin (hauteur

relative de pic RA$_1$) et à un composant polymère fortement cristallin (hauteur relative de pic RA$_2$), et à une température située entre ces premier et deuxième pics, un minimum de la courbe (hauteur de la courbe au minimum MA), et que le rapport RAi/MA de la hauteur du pic du composant faiblement cristallin à la hauteur de la courbe au minimum est supérieur à 2,2.

2. Copolymère conforme à la revendication 1, dont l'indice de fluidité à chaud vaut de 1,2 à 1,4 dg/min et la masse volumique vaut de 0,915 à 0,919 g/cm$^3$, et chez lequel le rapport I$_{10}$/I$_2$ vaut de 7,2 à 7,5 et le rapport RA$_1$/RA$_2$ de la hauteur du pic du composant faiblement cristallin à la hauteur du pic du composant polymère fortement cristallin est inférieur à 3,0.

3. Copolymère conforme à la revendication 1, dont l'indice de fluidité à chaud vaut 1,3 g/10 min.

4. Copolymère conforme à la revendication 1, chez lequel le rapport des indices de fluidité à chaud vaut 7,4.

5. Copolymère conforme à la revendication 1, chez lequel le rapport Mw/Mn des masses molaires moyennes vaut de 3,3 à 3,6.

6. Copolymère conforme à la revendication 1 ou 2, qui est un copolymère d'éthylène et d'hex-1-ène ou d'éthylène et d'oct-1-ène, préparé dans des conditions de polymérisation en solution de Ziegler-Natta.

7. Copolymère conforme à la revendication 6, pour lequel les conditions de polymérisation en solution comportent une température de 170 à 174 °C, et un rapport molaire Al/Ti, du co-catalyseur au catalyseur, de 4/1 à 5/1.

8. Copolymère conforme à la revendication 1, 2 ou 6, qui se présente sous forme de feuille ou de film, ou comme au moins une couche d'un film multicouche, ou sous forme d'un article stratifié, d'un sachet, d'un sac ou d'une poche comprenant une telle feuille, un tel film, ou un tel film multicouche.

9. Mélange de polymères comprenant un copolymère conforme à la revendication 1, 2 ou 6 et un ou plusieurs homopolymère(s) ou interpolymère(s) d'éthylène supplémentaire(s)

10. Mélange de polymères comprenant de 40 à 95 %, par rapport au poids total de polymères, d'un copolymère conforme à la revendication 1, 2 ou 6, et de 60 à 5 % d'un deuxième polymère.

11. Mélange de polymères conforme à la revendication 10, comprenant de 60 à 90 % dudit copolymère et de 40 à 10 % dudit deuxième polymère.

12. Mélange de polymères conforme à la revendication 11, comprenant de 70 à 90 % dudit copolymère et de 30 à 10 % dudit deuxième polymère.

13. Mélange de polymères conforme à l'une des revendications 10 à 12, dans lequel ledit deuxième polymère est un polyéthylène basse densité (PEbd).

14. Mélange de polymères conforme à l'une des revendications 10 à 13, préparé *in situ* dans un système de polymérisation à réacteurs multiples disposés en série, dans lequel le composant polymère produit dans le premier réacteur de la série présente une masse volumique de polymère inférieure et/ou une masse molaire égale ou inférieure à celle(s) du deuxième (ou dernier) composant polymère.

15. Mélange de polymères conforme à l'une des revendications 10 à 14, qui se présente sous forme de feuille ou de film, ou comme au moins une couche d'un film multicouche, ou sous forme d'un article stratifié, d'un sachet, d'un sac ou d'une poche comprenant une telle feuille, un tel film, ou un tel film multicouche.

Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5272236 A
- US 5210142 P, Kale
- US 5370940 P, Hazlitt
- US 4243619 P, Fraser
- US 5376439 P, Hodgson
- WO 9826000 A
- US 2002198341 A
- US 2003207955 A
- US 6593005 P
- US 6552129 B
- US 6426384 B
- US 6410659 B
- US 5714547 A
- US 5681523 A
- US 4621009 A
- US 4337284 A
- US 4258166 A
- US 4242479 A
- US 4226905 A
- US 4136072 A
- US 4063009 A
- US 3826792 A
- US 3574138 A

- EP 882743 A
- EP 958313 A
- EP 882741 A
- EP 460942 A
- EP 341091 A
- EP 141597 A
- EP 109779 A
- WO 9946302 A
- WO 9526372 A
- WO 9414855 A
- JP 2005089693 A
- WO 9914271 A
- US 2003078357 A
- US 4798081 A
- US 5008204 A
- US 5292845 A
- US 5089321 A
- US 4314912 A, Lowery, Jr.
- US 4547475 A, Glass
- US 4612300 A, Coleman, III
- US 5420090 A, Spencer
- US 4547475 P

**Non-patent literature cited in the description**

- Periodic Table of the Elements. CRC Press, Inc, 2003
- **WILD et al.** Poly. Phys. Ed. *Journal of Polymer Science,* 1982, vol. 20, 441
- **L. D. CADY.** The Role of Comonomer Type and Distribution in LLDPE Product Performance. *SPE Regional Technical Conference, Quaker Square Hilton,* 01 October 1985, 107-119

- **J. C. RANDALL.** *Rev. Macromol. Chem. Phys.,* vol. C29, 201-317
- **WILLIAMS ; WARD.** Polymer Letters. *Journal of Polymer Science,* 1968, vol. 6, 621